# EUROPÄISCHE PATENTSCHRIFT

(11) **EP 1 321 272 B1**
(45) Veröffentlichungstag und Bekanntmachung des Hinweises auf die Patenterteilung: **16.07.2008**
(21) Anmeldenummer: 02023561.0
(22) Anmeldetag: 23.10.2002
(51) Int. Cl.: B29C 45/17

(54) **Verfahren zum Verstellen eines Werkzeugs und Vorrichtung hierzu**
Method for adjusting a mould and system therefore
Procédé pour l'ajustage d'un moule et système associé

(30) Priorität: 17.12.2001 DE 10161911
(43) Veröffentlichungstag der Anmeldung: 25.06.2003
(73) Patentinhaber: Adcuram Maschinenbauholding GmbH, 80333 München (DE)
(72) Erfinder: Füller, Klaus, Dipl.-Ing., 19061 Schwerin (DE); Elsner, Lothar, Dipl.-Ing. (FH), 19075 Pampow (DE)
(74) Vertreter: Gosdin, Michael

(56) Entgegenhaltungen:
- DE-A- 2 065 899
- US-A- 4 105 390
- US-A- 4 281 977
- PATENT ABSTRACTS OF JAPAN vol. 1999, no. 05, 31. Mai 1999 (1999-05-31) & JP 11 033796 A (AIDA ENG LTD), 9. Februar 1999 (1999-02-09)
- PATENT ABSTRACTS OF JAPAN vol. 014, no. 023 (M-920), 17. Januar 1990 (1990-01-17) & JP 01 263007 A (MITSUBISHI HEAVY IND LTD), 19. Oktober 1989 (1989-10-19)

## Beschreibung

Die Erfindung betrifft eine Vorrichtung zur Verstellung der Einbauhöhe eines Werkzeuges, insbesondere eines Spritzgießwerkzeuges, die eine über Holme geführte bewegliche Werkzeugaufspannplatte umfaßt, wobei mit jedem Holm ein Verstellelement formschlüssig verbunden ist, die über einen zentralen Antrieb axial relativ zum Holm verstellbar sind und die Werkzeugaufspannplatte in ihrer Lage relativ zu den Holmen verändert sowie einen Abschlussdeckel, der an der beweglichen Werkzeugaufspannplatte angeordnet ist. Weiterhin betrifft die Erfindung ein Verfahren zum Beseitigen des Spiels in einer Einbauhöhenverstellung für ein Werkzeug, insbesondere Spritzgießwerkzeug, bei der eine bewegliche Werkzeugaufspannplatte über Holme geführt wird und über Verstellelemente in ihrer Lage relativ zu den Holmen veränderbar ist, wobei die Verstellelemente mit den Holmen formschlüssig in Verbindung stehen und über einen zentralen Antrieb um diese rotiert werden, wodurch eine axiale Verstellung der relativen Lage zu den Holmen erfolgt.

Einbauhöhenverstellungen für Werkzeuge der gattungsgemäßen Art sind allgemein bekannt. So beschreibt beispielsweise die gattungsbildende DE-A-2065899 bzw, die US-A-4105390 eine Vorrichtung, bei der über einen zentralen Antriebsmotor die verfahrbare Werkzeugträgerplatte mittels eines Verbindungsgliedes, das zwischen der Werkzeugträgerplatte und dem Schließkolben angeordnet ist, verschoben wird und damit der Gesamthub verändert werden kann.

Nachteilig bei den bekannten Vorrichtungen ist es, dass das systembedingte Spiel, das durch die Summe der Toleranzen in den einzelnen Bauteilen entsteht und zur Bewegung der Bauteile erforderlich ist, auch nach der Justierung der Einbauhöhe eine dem Axialspiel entsprechende Relativbewegung zu den Holmen ermöglicht.

**Aufgabe** der Erfindung ist es, eine Vorrichtung und ein Verfahren anzubieten, die es ermöglicht, in einfacher Weise die Relativbewegung zwischen der beweglichen Werkzeugaufspannplatte und den Holmen weitgehendst zu eliminieren.

Die **Lösung** der Aufgabe ist dadurch gekennzeichnet, dass mindestens eins der Verstellelemente mittels eines verschiebbaren Kolbens gegen eine Axialbewegung und gegen Verdrehen arretierbar ist. Hierdurch wird es möglich, vorhandenes Spiel zwischen den Bauteilen zu kompensieren und folglich die durchgeführte Justierung der Werkzeugaufspannplatte in dieser Lage festzulegen.

Vorteilhafterweise wird der Kolben hydraulisch, pneumatisch oder mechanisch betätigt. In allen Fällen wird erreicht, dass das Verstellelement zwischen dem Abschlussdeckel und der beweglichen Werkzeugaufspannplatte eingespannt und damit festgelegt wird.

Fortbildungsgemäß ist vorgesehen, die Steuerung der Feststellvorrichtung, also das Aktivieren beispielsweise des Kolbens durch Beaufschlagung mit einem Hydraulik- oder Pneumatikdruck oder das Verdrehen einer Gewindespindel, mit der Steuerung der Maschine zu koppeln.

Das erfindungsgemäße Verfahren ist dadurch gekennzeichnet, dass nach der axialen Verstellung das Verstellelement durch Aktivieren eines Kolbens in seiner Lage fixiert wird.

Am besten wird die Fixierung des Verstellelementes dadurch erreicht, dass das Verstellelement zwischen der beweglichen Werkzeugaufspannplatte und einem an dieser angeordneten Abschlußdeckel über die Feststellvorrichtung festgelegt wird, in axialer Richtung geschieht dies kraftschlüssig und gegen Verdrehen reibschlüssig. Die Verstellvorrichtung wird quasi eingeklemmt, in dem die Feststellvorrichtung, vorzugsweise über die Maschinensteuerung veranlaßt, mit einem Druck beaufschlagt wird. Der Druck kann hierbei hydraulisch oder pneumatisch aufgebaut werden. Selbstverständlich ist auch eine mechanische Lösung denkbar, hier wird insbesondere an eine Gewindespindel gedacht.

In der Zeichnung ist ein Ausführungsbeispiel der Erfindung dargestellt.
- Fig. 1: zeigt schematisch eine Spritzgießmaschine,
- Fig. 2: einen Schnitt durch einen Bereich des Verstellsystems, und
- Fig. 3: eine Ansicht auf den Antrieb des Verstellsystems

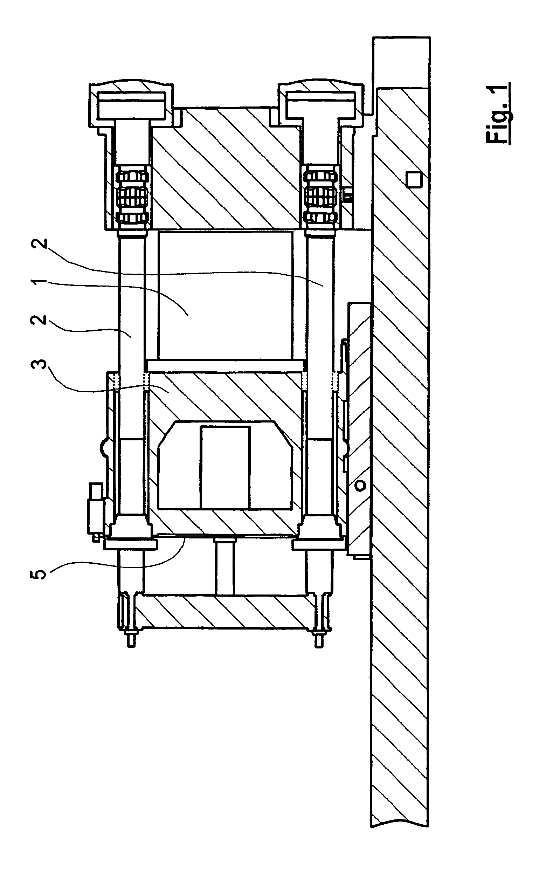

In Figur 1 ist eine Spritzgießmaschine dargestellt; in der ein Werkzeug 1 zwischen einer festen und einer beweglichen Werkzeugaufspannplatte 3 aufgenommen ist. Die bewegliche Werkzeugaufspannplatte 3 wird über Holme 2 geführt. Da unterschiedliche Werkzeughöhen zum Einsatz gelangen, ist es erforderlich, die Einbauhöhe individuell an die jeweiligen Erfordernisse anpassen zu können. Deshalb ist es möglich, die Lage der beweglichen Werkzeugaufspannplatte 3 relativ zu den Holmen 2 zu verändern. Ein entsprechendes Verstellsystem 4 ist vorzugsweise über ein Gewinde mit den Holmen verbunden. Durch Verdrehen des Verstellsystems 4 wird dieses axial auf den Holmen verschoben. Da die Ansteuerung zentral erfolgt, in der Regel über eine alle Verstellsysteme 4 umfassende Kette 5, ist sichergestellt, dass alle Verstellsysteme 4 um den gleichen Winkel verdreht werden und folglich keine Verspannung erfolgen kann. Das Verstellsystem 4 ist mit der beweglichen Werkzeugaufspannplatte 3 verbunden und nimmt diese mit.

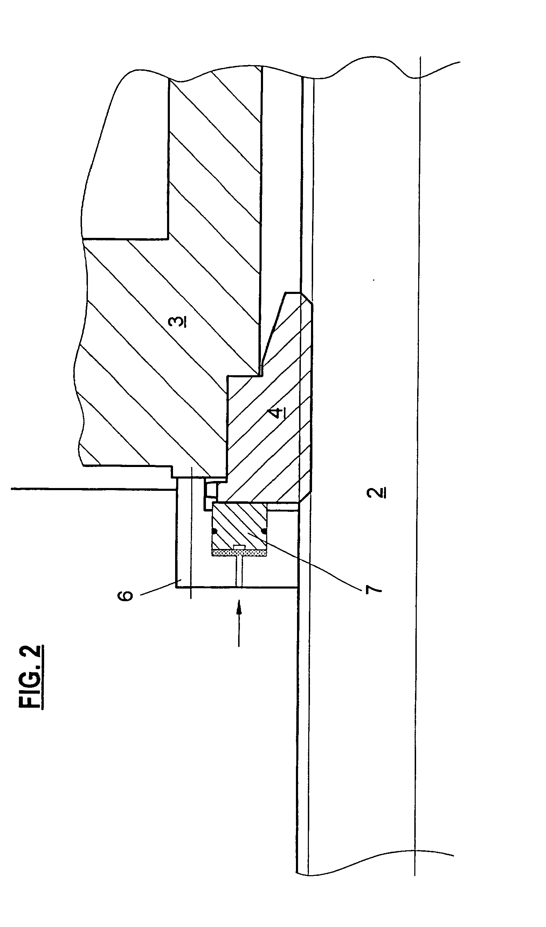

Figur 2 verdeutlicht, wie das Verstellsystem 4 die relative Lage der beweglichen Werkzeugaufspannplatte 3 verändert. Das Verstellsystem 4 ist über ein Gewinde mit dem Holm 2 verbunden. Durch Verdrehen des Verstellsystems 4 wird dieses axial auf dem Holm 2 bewegt und kommt entweder an der beweglichen Werkzeugaufspannplatte 3 oder der Feststellvorrichtung 7 zur Anlage. Da auch die Feststellvorrichtung 7 über den Abschlussdeckel 6 mit der beweglichen Werkzeugaufspannplatte 3 in Verbindung steht, wird bei einer Verdrehung des Verstellsystems 4 zwangsweise die bewegliche Werkzeugaufspannplatte 3 in ihrer Lage mit verändert. Um diese "neue" Lage der beweglichen Werkzeugaufspannplatte 3 zu fixieren wird die Verstellvorrichtung 4 gegen die bewegliche Werkzeugaufspannplatte 3 gedrückt und quasi eingeklemmt.

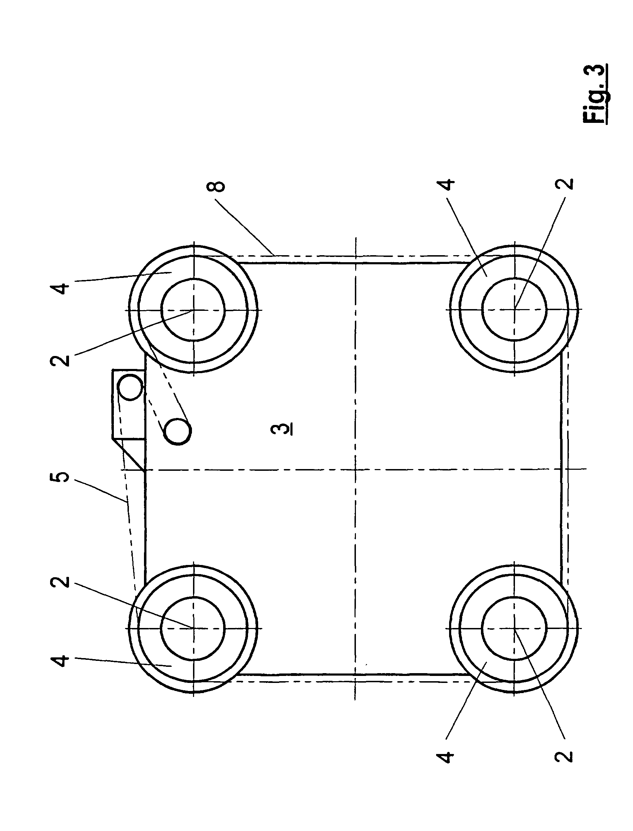

Aus Figur 3 ist die zentrale Verstellung ersichtlich. Ein zentraler Antrieb 5 ist über eine Kette 8 mit den jeweils an den Holmen 2 angeordneten Verstellelementen 4 verbunden. Über den Antrieb 5 werden alle Verstellelemente 4 betätigt, hiermit ist sichergestellt, dass alle Verstellelemente 4 der gleichen Winkelveränderung unterzogen werden und folglich bei gleicher Gewindesteigung in der Verbindung zwischen Verstellelement 4 und Holm 2, was vorauszusetzen ist, auch einen gleichen Hub relativ zum Holm 2 ausführen.

### Bezugszeichenliste:

- 1: Werkzeug
- 2: Holm
- 3: bewegliche Werkzeugaufspannplatte
- 4: Verstellelement
- 5: zentraler Antrieb für Verstellelement 4
- 6: Abschlussdeckel
- 7: Feststellvorrichtung
- 8: Kette

## Patentansprüche

1. Vorrichtung zur Verstellung der Einbauhöhe eines Werkzeuges (1), insbesondere eines Spritzgießwerkzeuges, die eine über Holme (2) geführte bewegliche Werkzeugaufspannplatte (3) umfaßt, wobei mit jedem Holm (2) ein Verstellelement (4) formschlüssig verbunden ist, die über einen zentralen Antrieb (5) axial relativ zum Holm (2) verstellbar sind und die Werkzeugaufspannplatte (3) in ihrer Lage relativ zu den Holmen (2) verändert sowie einen Abschlussdeckel (6), der an der beweglichen Werkzeugaufspannplatte (3) angeordnet ist,
**dadurch gekennzeichnet, dass**
mindestens eines der Verstellelemente (4) mittels einer Feststellvorrichtung (7) gegen eine Axialbewegung und gegen Verdrehen arretierbar ist, wobei die Feststellvorrichtung (7) ein verschiebbarer Kolben ist.

2. Vorrichtung nach Anspruch 1, **dadurch gekennzeichnet, dass** der Kolben hydraulisch betätigt wird.

3. Vorrichtung nach Anspruch 1, **dadurch gekennzeichnet, dass** der Kolben pneumatisch betätigt wird.

4. Vorrichtung nach Anspruch 1, **dadurch gekennzeichnet, dass** der Kolben mechanisch betätigt wird.

5. Vorrichtung nach einem der Ansprüche 1 bis 4, **dadurch gekennzeichnet, dass** die Betätigung des Kolbens (7) über die Maschinensteuerung gesteuert wird.

6. Verfahren zum Beseitigen des Spiels in einer Einbauhöhenverstellung für ein Werkzeug (1), insbesondere Spritzgießwerkzeug, bei der eine bewegliche Werkzeugaufspannplatte (3) über Holme (2) geführt wird und über Verstellelemente (4) in ihrer Lage relativ zu den Holmen (2) veränderbar ist, wobei die Verstellelemente (4) mit den Holmen (2) formschlüssig in Verbindung stehen und über einen zentralen Antrieb (5) um diese rotiert werden, wodurch eine axiale Verstellung der relativen Lage zu den Holmen (2) erfolgt,
**dadurch gekennzeichnet, dass**
nach der axialen Verstellung das Verstellelement (4) durch Aktivieren einer Feststellvorrichtung (7) in Form eines Kolbens in seiner Lage fixiert wird.

7. Verfahren nach Anspruch 6 **dadurch gekennzeichnet, dass** die Fixierung des Verstellelementes (4) **dadurch** erfolgt, dass das Verstellelement zwischen der beweglichen Werkzeugaufspannplatte (3) und einem an dieser angeordneten Abschlußdeckel (6) über den Kolben (7) kraftschlüssig festgelegt wird.

8. Verfahren nach Anspruch 7, **dadurch gekennzeichnet, dass** die Alktivierung des Kolbens (7) durch Beaufschlagung eines Druckes auf den Kolben (7) erfolgt.

9. Verfahren nach Anspruch 8, **dadurch gekennzeichnet, dass** die Druckbeaufschlagung hydraulisch oder pneumatisch erfolgt.

10. Verfahren nach Anspruch 7, **dadurch gekennzeichnet, dass** der Kolben (7) mechanisch, vorzugsweise durch Verdrehen einer Gewindespindel, erfolgt.

## Claims

1. Device for the adjustment of the daylight of a tool (1), especially of an injection moulding tool, which comprises a movable tool clamping plate (3) which is guided by bars (2), wherein with each bar (2) an adjusting element (4) is form-fitted connected, which are axially adjustable relatively to the bar (2) by means of a central drive (5) and which change the position of the tool clamping plate (3) relatively to the bars (2), and a cover (6) which is arranged at the movable tool clamping plate (3),
**characterized in that**
at least one of the adjusting elements (4) is lockable against an axial movement and against distortion by means of a locking device (7), wherein the locking device (7) is a movable piston.

2. Device according to claim 1, **characterized in that** the piston is activated hydraulically.

3. Device according to claim 1, **characterized in that** the piston is activated pneumatically.

4. Device according to claim 1, **characterized in that** the piston is activated mechanically.

5. Device according to one of claims 1 till 4, **characterized in that** the activation of the piston (7) is controlled by the machine control.

6. Method for the elimination of the clearance in a daylight adjustment of a tool (1), especially of an injection moulding tool, wherein a movable tool clamping plate (3) is guided by bars (2) and its position is changeable relatively to the bars (4) by means of adjusting elements (4), wherein the adjusting elements (4) are form-fitted connected with the bars (2) and are rotated around them by means of a central drive (5), by which an axial adjustment of the relative position to the bars (2) takes place,
**characterized in that**
after the axial adjustment the adjusting element (4) is fixed in its position by activating of a locking device (7) being a piston.

7. Method according to claim 6, **characterized in that** the fixation of the adjusting element (4) takes place **in that** way, that the adjusting element is force-fitted fixed by the piston (7) between the movable tool clamping plate (3) and a cover (6) which is arranged at the plate.

8. Method according to claim 7, **characterized in that** the activation of the piston (7) takes place by application of a pressure onto the piston (7).

9. Method according to claim 8, **characterized in that** the application of the pressure takes place hydraulically or pneumatically.

10. Method according to claim 7, **characterized in that** the piston (7) is activated mechanically, preferably by distortion of a threaded spindle.

## Revendications

1. Dispositif pour le réglage de la hauteur d'installation d'un outil (1), en particulier d'un outil de moulage par injection, qui comprend une plaque de serrage d'outil (3) mobile guidée sur des longerons (2), un élément de réglage (4) étant connecté par engagement par coopération de forme à chaque longeron (2), chaque élément de réglage pouvant être réglé axialement par rapport au longeron (2) par le biais d'un entraînement central (5), et modifiant la position de la plaque de serrage d'outil (3) par rapport aux longerons (2), et qui comprend un couvercle de fermeture (6) qui est disposé sur la plaque de serrage d'outil mobile (3),
**caractérisé en ce que**
au moins l'un des éléments de réglage (4) peut être bloqué au moyen d'un dispositif de fixation (7) à l'encontre d'un mouvement axial et à l'encontre d'une rotation, le dispositif de fixation (7) étant un piston coulissant.

2. Dispositif selon la revendication 1, **caractérisé en ce que** le piston est actionné de manière hydraulique.

3. Dispositif selon la revendication 1, **caractérisé en ce que** le piston est actionné de manière pneumatique.

4. Dispositif selon la revendication 1, **caractérisé en ce que** le piston est actionné de manière mécanique.

5. Dispositif selon l'une quelconque des revendications 1 à 4, **caractérisé en ce que** l'actionnement du piston (7) est commandé par le biais de la commande de la machine.

6. Procédé pour éliminer le jeu dans un réglage de la hauteur d'installation d'un outil (1), notamment un outil de moulage par injection, dans lequel une plaque de serrage d'outil mobile (3) est guidée sur des longerons (2) et peut modifier sa position par rapport aux longerons (2) par le biais d'éléments de réglage (4), les éléments de réglage (4) étant en liaison par engagement par coopération de forme avec les longerons (2) et tournant autour d'eux par le biais d'un entraînement central (5), de sorte qu'un réglage axial de la position relative par rapport aux longerons (2) ait lieu,
**caractérisé en ce**
**qu'**après le réglage axial, l'élément de réglage (4) est fixé dans sa position par l'actionnement d'un dispositif de fixation (7) en forme de piston.

7. Procédé selon la revendication 6, **caractérisé en ce que** la fixation de l'élément de réglage (4) s'effectue par le fait que l'élément de réglage est fixé par engagement par force par le biais du piston (7) entre la plaque' de serrage d'outil mobile (3) et un couvercle de fermeture (6) disposé sur celle-ci.

8. Procédé selon la revendication 7, **caractérisé en ce que** l'actionnement du piston (7) s'effectue par application d'une pression sur le piston (7).

9. Procédé selon la revendication 8, **caractérisé en ce que** l'application de pression s'effectue de manière hydraulique ou pneumatique.

10. Procédé selon la revendication 7, **caractérisé en ce que** le piston (7) est actionné de manière mécanique, de préférence par rotation d'une broche filetée.
